# EUROPEAN PATENT APPLICATION

(11) **EP 2 690 835 A1**
(43) Date of publication of application: **29.01.2014**
(21) Application number: 12760289.4
(22) Date of filing: 14.03.2012
(51) Int. Cl.: H04L 27/00, H04J 11/00, H04W 52/26

(54) **COMMUNICATION SYSTEM AND COMMUNICATION CONTROL METHOD**

(30) Priority: 24.03.2011 JP 2011065601
(71) Applicant: NEC Corporation, Tokyo 108-8001 (JP)
(72) Inventor: MIYAMOTO Hiroaki, Tokyo 108-8001 (JP); MORIMOTO Shinichi, Tokyo 108-8001 (JP)
(74) Representative: MacDougall, Alan John Shaw
(86) International application number: PCT/JP2012/056552
(87) International publication number: WO 2012/128146

(57) **Abstract**

A network monitoring unit (10) and a transmission path monitoring unit (22) provided along a wired transmission path connected to a wireless communication device (30) determine a traffic volume by detecting a volume of data on a wired transmission path. Wireless communication devices (30 and 40) change a multi-level modulation scheme based on the determined traffic volume and set transmission power so that a minimum level of data transmission can be guaranteed using a transmission rate corresponding to the multi-level modulation scheme.

## Description

### TECHNICAL FIELD

The present invention relates to a communication system, which includes a wireless communication device configured to perform wireless data communication, and a communication control method in the communication system.

### BACKGROUND ART

In general, a transmission rate in communication via a wireless transmission path of a wireless communication device is lower than that in communication via a wired transmission path. In wireless communication, transmission power is normally set to maximum power in consideration of necessary and sufficient power under the condition that data transmission of a maximum transmission rate is performed. Thus, even in a state in which a traffic volume of wireless communication is small and maximum transmission power is not necessary, maximum power is set in a wireless communication device and consequently ineffective power is consumed.

Technology for suppressing transmission power through automatic transmission power control (ATPC) in the wireless communication device is known. Even in this technology, an operation is performed so that minimum required power is secured in correspondence with a maximum transmission rate. Therefore, even when the ATPC has been used, the above-described problem that power is excessive and ineffective consumption occurs in a state in which a traffic volume is small is not solved. In order to solve this problem, a method of reducing a transmission rate during wireless communication and also setting a maximum level of transmission power to a low level according to the reduced transmission rate is considered. However, this method is not realistic because packet discard frequently occurs and data quality is deteriorated when data of a high transmission rate is processed.

Accordingly, a configuration in which a volume of data to be wirelessly transmitted and received is detected and a transmission rate (modulation scheme) and transmission power are set based on the detected data volume is known (for example, see Patent Document 1). Thereby, power can be saved because a low-level modulation scheme is set when a data volume is small and a transmission output can be reduced according to this setting.

### [Documents of the prior art]

### [Patent Document]

[Patent Document 1]
Japanese Unexamined Patent Application, First Publication No. 2006-279855

### DISCLOSURE OF INVENTION

### [Problems to be solved by the invention]

However, in the configuration disclosed in Patent Document 1, a data volume in a wireless transmission path is detected.

Transmission and reception of data through a wireless transmission path, for example, tend to be unstable according to a change in a radio wave state due to some disturbance. Accordingly, the case in which no accurate determination result is obtained when a traffic volume is determined based on a data volume is also considered.

Accordingly, the present invention has been made to solve the above-described problem, and an object of the invention is to more stably and accurately determine a traffic volume when transmission power control is performed based on the traffic volume in a wireless communication system.

### [Means for solving to the problems]

The present invention is a communication system including: a plurality of wireless communication devices which communicate with other wireless communication devices via a wireless transmission path; a traffic volume determination unit which determines a traffic volume based on a data volume of a wired transmission path connected to a specific wireless communication device and notifies a predetermined wireless communication device among the plurality of wireless communication devices of the determined traffic volume; a modulation level control unit which is included in each of the wireless communication devices and changes a modulation level to be used in a modulation process on data to be transmitted to the wireless transmission path based on the traffic volume of the notification; and a transmission power control unit which is included in each of the wireless communication devices and changes transmission power for transmitting a transmission signal obtained by the modulation process using the changed modulation level to the wireless transmission path.

In addition, the present invention is a communication system including: a plurality of wireless communication devices which communicate with other wireless communication devices via a wireless transmission path; a traffic volume determination unit which determines a traffic volume based on a data volume of a wired transmission path connected to a specific wireless communication device and notifies a predetermined wireless communication device among the plurality of wireless communication devices of the determined traffic volume; a plurality of wireless signal transmission and reception units which are included in each of the wireless communication devices and operate to execute at least a modulation process and a demodulation process corresponding to the modulation process; a plurality of antennas which are included in each of the wireless communication devices and correspond to the plurality of wireless signal transmission and reception units; a dividing/combining unit which is included in each of the wireless communication devices, divides transmission data to be transmitted to the wireless transmission path to output the divided transmission data to the plurality of wireless signal transmission and reception units, and combines reception data from the wireless transmission path input from the plurality of wireless signal transmission and reception units; a wireless signal transmission and reception operation control unit which is included in each of the wireless communication devices, and causes a predetermined wireless signal transmission and reception unit among the plurality of wireless signal transmission and reception units to execute an operation based on the traffic volume of the notification; and a dividing/combining control unit which is included in each of the wireless communication devices, and controls the dividing/combining unit to output the divided transmission data only to a wireless signal transmission and reception unit that executes the operation or combine only reception data output from a wireless signal transmission and reception unit that executes the operation.

In addition, the present invention is a communication control method in a communication system including a plurality of wireless communication devices that communicate with other wireless communication devices via a wireless transmission path, including: a traffic volume determination step of determining a traffic volume based on a data volume of a wired transmission path connected to a specific wireless communication device and notifying a predetermined wireless communication device among the plurality of wireless communication devices of the determined traffic volume; a modulation level control step which is included in each of the wireless communication devices and in which a modulation level to be used in a modulation process on data to be transmitted to the wireless transmission path is changed based on the traffic volume of the notification; and a transmission power control step which is included in each of the wireless communication devices and in which transmission power for transmitting a transmission signal obtained by the modulation process using the changed modulation level to the wireless transmission path is changed.

In addition, the present invention is a communication control method in a communication system including a plurality of wireless communication devices which communicate with other wireless communication devices via a wireless transmission path, wherein each of the plurality of wireless communication devices includes a plurality of wireless signal transmission and reception units which operate to execute at least a modulation process and a demodulation process corresponding to the modulation process, a plurality of antennas corresponding to the plurality of wireless signal transmission and reception units, and a dividing/combining unit which divides transmission data to be transmitted to the wireless transmission path to output the divided transmission data to the plurality of wireless signal transmission and reception units and combines reception data from the wireless transmission path input from the plurality of wireless signal transmission and reception units, the communication control method including: a traffic volume determination step of determining a traffic volume based on a data volume of a wired transmission path connected to a specific wireless communication device and notifying a predetermined wireless communication device among the plurality of wireless communication devices of the determined traffic volume; a wireless signal transmission and reception operation control step which is included in each of the wireless communication devices and which causes the predetermined wireless signal transmission and reception unit among the plurality of wireless signal transmission and reception units to execute an operation based on the traffic volume of the notification; and a dividing/combining control step which is included in each of the wireless communication devices and controls the dividing/combining unit to output the divided transmission data only to a wireless signal transmission and reception unit that executes the operation or combine only reception data output from a wireless signal transmission and reception unit that executes the operation.

### [Effect of the Invention]

According to the present invention, an effect that a traffic volume can be more stably and accurately determined when transmission power control is performed based on a determination result of a traffic volume in a wireless communication system is obtained.

### BRIEF DESCRIPTION OF THE DRAWINGS

FIG. 1 is a diagram illustrating a configuration example of a communication system serving as a first embodiment of the present invention.
FIG. 2 is a sequence diagram illustrating an operation example of main parts in the communication system serving as the first embodiment of the present invention.
FIG. 3 is a sequence diagram illustrating another operation example of main parts in the communication system serving as the first embodiment of the present invention.
FIG. 4 is a diagram illustrating an example of a processing step to be executed by a network monitoring unit and a transmission path monitoring unit in the first embodiment of the present invention.
FIG. 5 is a diagram illustrating a configuration example of a communication system serving as a second embodiment of the present invention.
FIG. 6 is a diagram illustrating an example of a processing step to be executed according to a traffic volume by a wireless control unit in the communication system in the second embodiment of the present invention.

### EMBODIMENTS FOR CARRYING OUT THE INVENTION

### [First embodiment]

### [Configuration example of communication system]

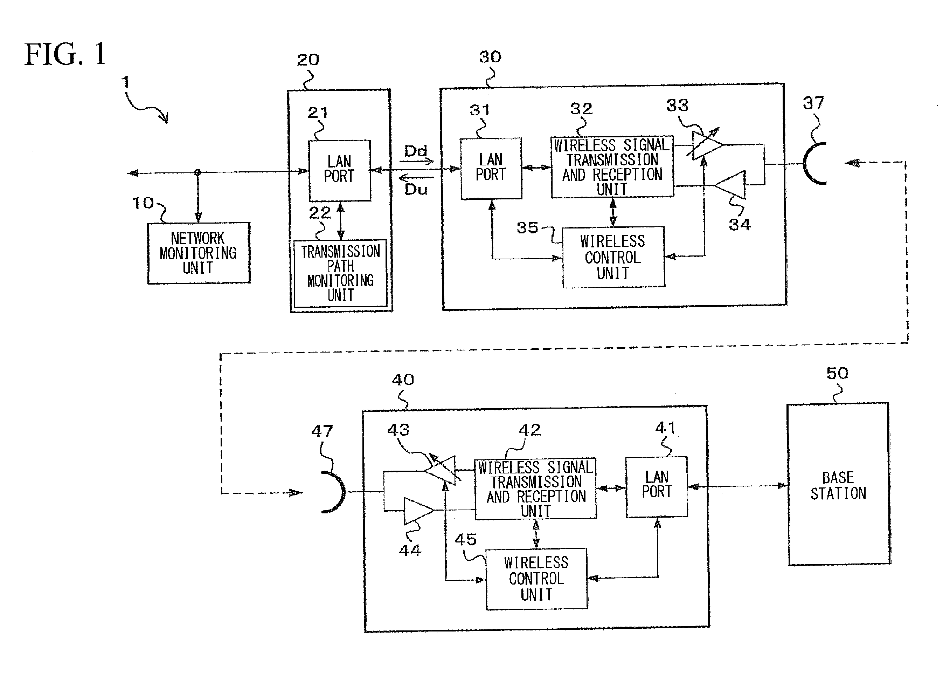

FIG. 1 illustrates a configuration example of the communication system 1 serving as a mode (first embodiment) for practicing the present invention. The communication system 1 illustrated in the drawing includes a network monitoring unit 10, a router 20, wireless communication devices 30 and 40, and a base station 50.

The wireless communication devices 30 and 40 are configured to be wirelessly communicable and set to communicate with each other through communication via a wireless transmission path. In addition, the wireless communication devices 30 and 40 are also communicable through communication by a wired transmission path. Also, for example, an Institute of Electrical and Electronics Engineers (IEEE) 802.11-based wireless local area network (LAN) standard can be adopted as a wireless communication standard. In addition, Ethernet (registered trademark) or the like can be adopted as a wired communication standard.

The router 20 is connected to the wireless communication device 30 by wire, thereby relaying communication between a communication network (network) corresponding to wireless communication of the wireless communication device 30 and another communication network by wire.

The network monitoring unit 10 is provided for a wired transmission path connected to the wireless communication device 30 via the router 20 as illustrated. Accordingly, the network monitoring unit 10 determines a traffic volume of each of uplink (UL) and downlink (DL) as a monitoring operation. Also, in the configuration of the communication system 1, UL traffic is in a direction in which data is transmitted and received from the wireless communication device 40 to the wireless communication device 30, and data is further transmitted to another network via the router 20. In addition, DL traffic is in a direction in which data is transmitted and received from the wireless communication device 30 to the wireless communication device 40.

The base station 50 operates a predetermined service using data via the wireless communication device 30 or 40. In the case of FIG. 1, an example of a mode in which a connection to the wireless communication device 40 via the wired transmission path has been established is illustrated.

Next, a configuration of the wireless communication device 30 in the above-described communication system 1 will be described. The wireless communication device 30 illustrated in the drawing includes a LAN port 31, a wireless signal transmission and reception unit 32, a transmission amplifier 33, a reception amplifier 34, a wireless control unit 35, and an antenna 37.

The LAN port 31 executes packet switching by identifying a destination (a media access control (MAC) address or the like) of a packet (frame) input to or output from the wired LAN. In FIG. 1, the LAN port 31 is mutually connected to the LAN port 21 within the router 20 as will be described later via the wired transmission path.

The wireless signal transmission and reception unit 32 executes a process of wirelessly transmitting and receiving data transmitted via the wired transmission path. In addition, the wireless signal transmission and reception unit 32 executes a process of transmitting data received via the wireless transmission path to the wired transmission path. The wireless signal transmission and reception unit 32 performs a digital modulation process on data output from the LAN port 31 via the wired transmission path and outputs a result of the digital modulation process to the transmission amplifier 33. In addition, the wireless signal transmission and reception unit 32 receives a signal received via the wireless transmission path from the reception amplifier 34, and forwards data obtained by performing a demodulation process for the digital modulation to the LAN port 31. Also, the digital modulation in the wireless signal transmission and reception unit 32 is multi-level modulation. As will be described later, a modulation level is changed and set according to a determined traffic volume. The operation of changing and setting the modulation level is controlled by the wireless control unit 35.

After the digital modulation on the data, the transmission amplifier 33 amplifies a transmission signal obtained from a modulation result. The antenna 37 transmits the transmission signal output from the transmission amplifier 33 as radio waves. In addition, the transmission amplifier 33 of the first embodiment changes and sets a transmission power level according to control of the wireless control unit 35 as will be described later. In addition, the reception amplifier 34 amplifies a reception signal obtained by receiving radio waves using the antenna 37, and outputs the amplified reception signal to the wireless signal transmission and reception unit 32.

Also, the wireless communication device 40 includes a LAN port 41, a wireless signal transmission and reception unit 42, a transmission amplifier 43, a reception amplifier 44, a wireless control unit 45, and an antenna 47, and is configured as in the above-described wireless communication device 30. The LAN port 41 of the wireless communication device 40 is connected to the base station 50 via the wired transmission path as illustrated.

In addition, the router 20 includes a LAN port 21 and a transmission path monitoring unit 22. The router 20 is arranged between the wired transmission path and the wireless communication device 30. The LAN port 21 is provided to be interposed between the LAN port 31 within the wireless communication device 30 and a transmission path of the wired transmission path. The transmission path monitoring unit 22 detects the data volume of each of UL data Du and DL data Dd to be transmitted and received between the above-described LAN port 21 and the wireless communication device 30 as a data monitoring operation. Accordingly, the transmission path monitoring unit 22 forwards the detected data volume to the network monitoring unit 10 via the wired transmission path. In addition, the transmission path monitoring unit 22 can independently determine the traffic volume based on the detected data.

The communication system 1 of the first embodiment assumes the case in which a determination is made by dividing traffic volumes using three steps of "large," "medium," and "small" traffic volumes for modulation level and transmission power control.

In this case, the transmission path monitoring unit 22 is set to make a determination with respect to the "large" traffic volume as will be described later.

The network monitoring unit 10 determines the traffic volume based on information on the data volume forwarded from the transmission path monitoring unit 22. The network monitoring unit 10 determines the "medium" and "small" traffic volumes.

In addition, the network monitoring unit 10 and the transmission path monitoring unit 22 provide notification of determination results of UL and DL traffic volumes as follows. First, the network monitoring unit 10 notifies the wireless control unit 35 within the wireless communication device 30 and the transmission path monitoring unit 22 of the determination result of the DL traffic volume. In addition, the wireless control unit 45 of the wireless communication device 40 and the transmission path monitoring unit 22 are notified of the determination result of the UL traffic volume.

In addition, the transmission path monitoring unit 22 provides notification (transmission) of the determination result of the DL traffic volume to the wireless control unit 35 of the wireless communication device 30 and the network monitoring unit 10. In addition, the wireless control unit 45 within the wireless communication device 40 and the network monitoring unit 10 are notified of the determination result of the UL traffic volume.

The LAN port 31 in the wireless communication device 30 forwards the DL traffic volume determination result of the notification to the wireless control unit 35. The wireless control unit 35 controls a change in the modulation level in the wireless signal transmission and reception unit 32 and the transmission power in the transmission amplifier 33 based on the forwarded traffic volume determination result. In addition, the LAN port 31 delivers the information on the UL traffic volume determination result to the wireless signal transmission and reception unit 32, and hence the information is transmitted to the wireless communication device 40 via the wireless transmission path. In the wireless communication device 40, the received information on the UL traffic volume determination result is demodulated by the wireless signal transmission and reception unit 42, and then the demodulated information is delivered to the wireless control unit 45. The wireless control unit 45 changes the modulation level in the wireless signal transmission and reception unit 42 and the transmission power in the transmission amplifier 43 based on the delivered UL traffic volume determination result.

### [Control example of modulation level and transmission power: case of DL data]

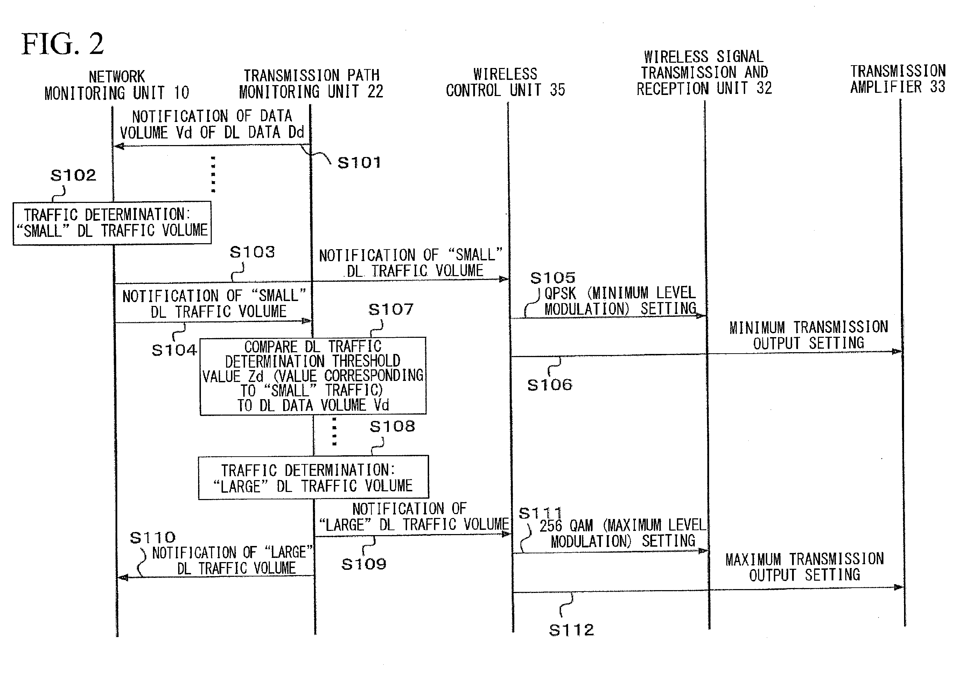

Next, an example of an operation of controlling the modulation level and the transmission power to be executed in the communication system 1 by the above-described configuration will be described with reference to the sequence diagram of FIG. 2. In this drawing, an operation example corresponding to the case in which the DL traffic volume is in a "small" state and then transitions to a "large" state is illustrated.

First, the transmission path monitoring unit 22 detects a data volume Vd of DL data Dd, and notifies the network monitoring unit 10 of the detected data volume Vd in step S101. Also, a detection and notification process of the data volume Vd serving as step S101 is iteratively executed at every predetermined time.

The network monitoring unit 10 monitors the data volume Vd of the notification in the above-described step S101 and determines the traffic volume by executing a predetermined statistical process. For example, the network monitoring unit 10 can calculate a transmission rate using the data volume Vd in a unit time and determine the traffic volume based on the transmission rate. Accordingly, in this case, a determination result indicating that the traffic volume is "small" is assumed to have been obtained by the network monitoring unit 10 as illustrated in step S102.

Accordingly, the network monitoring unit 10 notifies the wireless control unit 35 of the determination result indicating that the DL traffic volume is "small" in step S103, and notifies the transmission path monitoring unit 22 of the determination result in step S104.

According to the notification in step S103, the wireless control unit 35 controls the wireless signal transmission and reception unit 32 so that quadrature phase shift keying (QPSK) modulation is executed by the wireless signal transmission and reception unit 32 in step S105. In this case, the QPSK modulation has a lowest modulation level and a lowest transmission rate among multi-level modulation schemes to be dealt with by the wireless signal transmission and reception unit 32.

In addition, according to the notification in the above-described step S103, the wireless control unit 35 controls a signal to be transmitted according to lowest transmission power for the transmission amplifier 33 in step S106. If the modulation level is low and the transmission rate is low, transmission power necessary for data transmission is reduced. It is also necessary to further increase the transmission power when the modulation level is higher. The above-described lowest transmission power has a power level capable of being regarded as a minimum required level necessary to perform data transmission according to QPSK modulation.

In addition, according to the determination result indicating that DL traffic is "small" in step S102, the transmission path monitoring unit 22 compares a DL traffic determination threshold value Zd to a data volume Vd of DL data Dd in step S107. At this time, a predetermined value corresponding to a "small" DL traffic volume determined in step S102 is assigned to the DL traffic determination threshold value Zd. The transmission path monitoring unit 22 determines whether the traffic volume is "large" based on a comparison result while iteratively executing a comparison process in the above-described step S107. In the example of this drawing, the case in which a determination result indicating that the DL traffic volume is "large" has been obtained in step S 108 is illustrated.

According to the determination result of the above-described step S108, the transmission path monitoring unit 22 notifies each of the wireless control unit 35 and the network monitoring unit 10 that the DL traffic volume is "large" in steps S109 and S110.

According to the notification of step S109, the wireless control unit 35 sets 256 quadrature amplitude modulation (QAM) as the multi-level modulation scheme for the wireless signal transmission and reception unit 32 in step S111. In this case, 256 QAM becomes a modulation scheme of which the level is highest among multi-level modulations to be dealt with by the wireless signal transmission and reception unit 32. By setting 256 QAM, it is possible to perform data transmission by guaranteeing a high transmission rate corresponding to the "large" traffic volume. In addition, accordingly, the wireless control unit 35 sets a maximum transmission output for the transmission amplifier 33 in step S 112. Thereby, transmission power necessary to guarantee a high transmission rate in correspondence with 256 QAM is obtained.

In the first embodiment as described above, the modulation level is changed according to a traffic volume and optimum transmission power corresponding to the modulation level is set. Thereby, appropriate transmission power corresponding to the traffic volume is set while stable data communication is performed, so that it is possible to significantly reduce power consumption as compared to the case in which maximum transmission power is set normally.

Accordingly, in the first embodiment, the network monitoring unit 10 and the transmission path monitoring unit 22 are provided at the wired transmission path side without being provided at the wireless transmission path side. That is, a functional unit for data volume detection and a traffic volume determination based thereon is provided along the wired transmission path. In the wireless transmission path, for example, data transmission is likely to be unstable according to a radio wave state or the like. However, the wired transmission path is not affected by the radio wave state or the like, and hence more stable data transmission is performed. Accordingly, in the first embodiment, it is possible to more accurately determine the traffic volume even in the wireless communication system.

### [Control example of modulation level and transmission power: case of UL data]

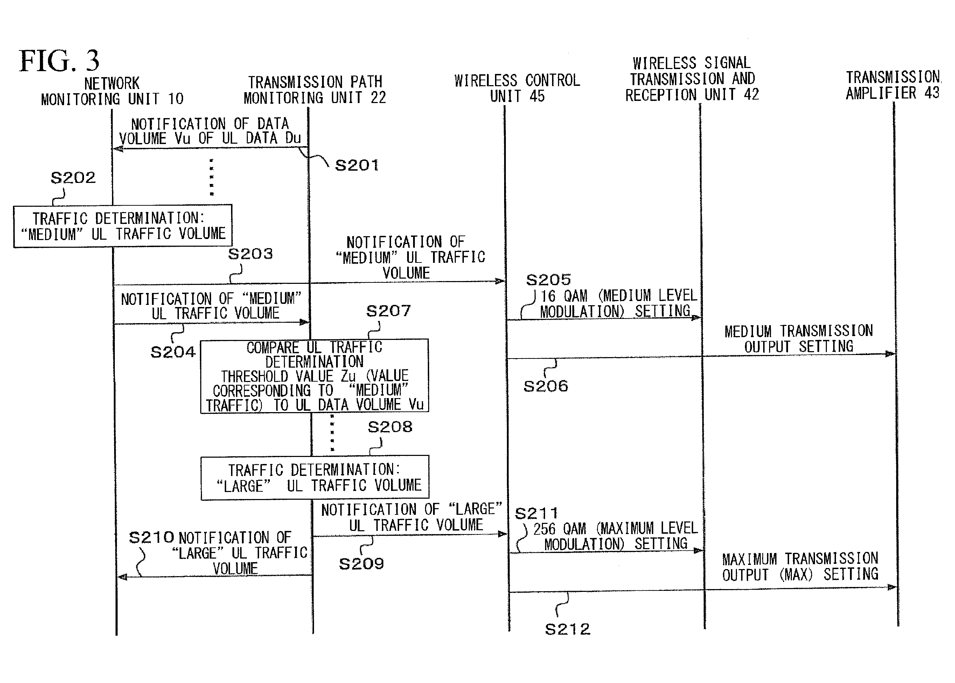

Next, another example of an operation of controlling the modulation level and the transmission power to be executed in the communication system 1 will be described with reference to the sequence diagram of FIG. 3. In this drawing, an operation example corresponding to the case in which the DL traffic volume has transitioned from a "medium" state to a "large" state is illustrated.

The transmission path monitoring unit 22 detects a data volume Vu of DL data Du, and notifies the network monitoring unit 10 of the detected data volume Vu in step S201. Also, a process of notifying the network monitoring unit 10 of the detected data volume Vu, for example, is iteratively executed at every predetermined time.

The network monitoring unit 10 monitors the data volume Vu of the notification in the above-described step S201 and determines the UL traffic volume by executing a predetermined statistical process. In this case, it is assumed that the UL traffic volume is determined to be "medium" as illustrated as step S202.

Accordingly, the network monitoring unit 10 notifies the wireless control unit 45 of a determination result of the "medium" UL traffic volume in step S203. In the case of the UL data Du, data is transmitted from the wireless communication device 40 to the wireless communication device 30. Thus, information on the determination result of the traffic volume is set to be transmitted to the wireless communication device 40 being transmission side. In addition, the network monitoring unit 10 notifies the transmission path monitoring unit 22 of the determination result of the "medium" UL traffic volume in step S204.

According to the notification in the above-described step S203, the wireless control unit 45 controls the wireless signal transmission and reception unit 42 so that a modulation process by 16 QAM is set in step S205. In this case, 16 QAM is a medium modulation level among multi-level modulation schemes to be dealt with by the wireless signal transmission and reception unit 42 and a minimum required transmission rate corresponding to the "medium" traffic volume is secured.

In addition, according to the notification in the above-described step S203, the wireless control unit 45 controls a signal to be transmitted according to medium transmission power for the transmission amplifier 43 in step S206. The above-described medium transmission power has a power level capable of being regarded to be a minimum required level necessary to perform data transmission according to 16 QAM.

In addition, according to the determination result indicating that the UL traffic is "medium" in step S202, the transmission path monitoring unit 22 compares the UL traffic determination threshold value Zu to the data volume Vu of the UL data Du in step S207. At this time, as the UL traffic determination threshold value Zu, a value to which a predetermined value corresponding to the "medium" UL traffic volume determined in step S202 has been assigned is set. In the above-described step S207, the transmission path monitoring unit 22 determines whether the traffic volume is "large" according to a process which is substantially the same as in the above step S107. In this drawing, the determination result indicating that the UL traffic volume is "large" is assumed to have been obtained in step S208. The process of steps S209 to S212 to be executed according to the determination result of the above-described step S208 is substantially the same as that of steps S 109 to S212 of FIG. 2.

In the first embodiment as described above, the transmission path monitoring unit 22 and the network monitoring unit 10 are assumed to determine traffic volumes of both directions of UL and DL at a wired transmission path side. According to the determination result, control of the multi-level modulation scheme and the transmission power is executed for the wireless communication device 30 or 40 serving as a data transmission side of a wireless communication network.

Also, as understood from the above description, the network monitoring unit 10 and the transmission path monitoring unit 22, for example, correspond to a traffic volume determination unit disclosed in the claims. In addition, the wireless control units 35 and 45, which execute the process of steps S105 and S111 of FIG. 2 and the process of steps S205 and S211 of FIG. 3, for example, correspond to a modulation level control unit disclosed in the claims. In addition, the wireless control units 35 and 45, which execute the process of steps S106 and S 112 of FIG. 3 and the process of steps S206 and S212 of FIG. 3, for example, correspond to a transmission power control unit disclosed in the claims.

### [Example of traffic volume determination process]

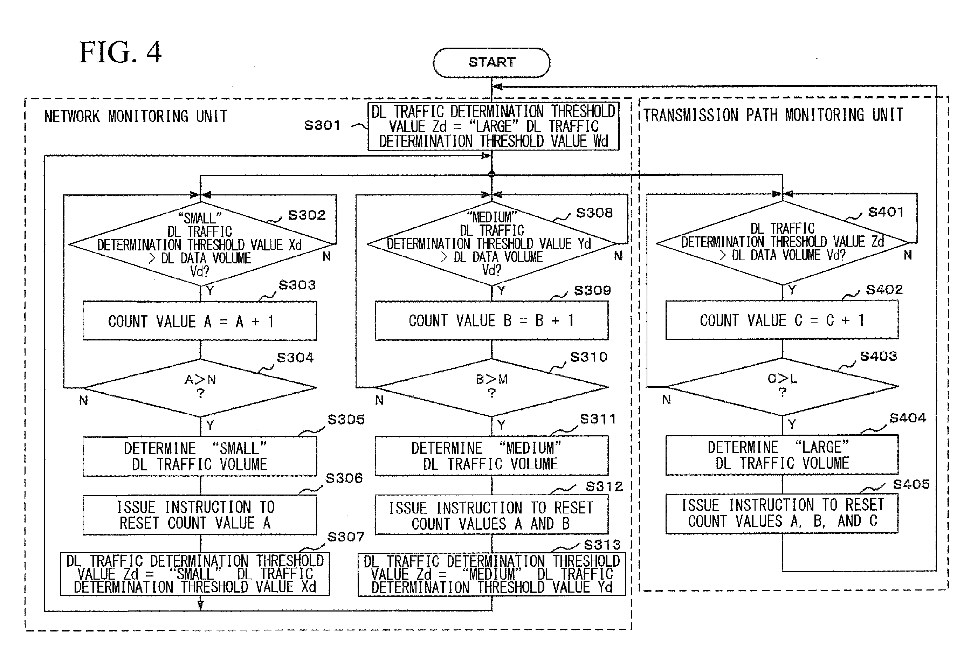

The flowchart of FIG. 4 illustrates an example of a processing step for a DL traffic volume determination to be executed by the network monitoring unit 10 and the transmission path monitoring unit 22. That is, in FIG. 4, a processing step of steps S101, S102, S107, and S108 of FIG. 1 is illustrated.

In addition, in FIG. 4, steps S301 to S313 are a process to be executed by the network monitoring unit 10. Steps S401 to S405 are a process to be executed by the transmission path monitoring unit 22. Also, although the DL traffic volume is a determination target in FIG. 4, it is also possible to determine the UL traffic volume according to a process based on FIG. 4 as will be described later.

In FIG. 4, the network monitoring unit 10 assigns a "large" DL traffic determination threshold value Wd to a DL traffic determination threshold value Zd in step S301. The determination threshold value Wd is a threshold value preset in correspondence with a "large" DL traffic volume. Also, after step S301, a determination step (steps S302 to S307) for the "small" DL traffic volume and a determination step (steps S308 to S313) for the "medium" DL traffic volume to be executed by the network monitoring unit 10 are executed in parallel. In addition, a determination step (step S401 to S405) for the "large" DL traffic volume to be executed by the transmission path monitoring unit 22 is also executed in parallel with each determination step described above.

In step S302, the network monitoring unit 10 determines whether Xd > Vd by comparing the "small" DL traffic determination threshold value Xd to the DL data volume Vd detected by itself. The "small" DL traffic determination threshold value Xd is preset based on a data volume corresponding to the maximum in the range of a data volume regarded to be the DL traffic volume.

When it is determined that the condition of Xd > Vd is not satisfied in the above-described S302, the network monitoring unit 10 iterates the comparison process of step S302 by skipping the process of steps S303 and S304. When it is determined that Xd > Vd in step S302, the network monitoring unit 10 increments a count value A in step S303. Next, the network monitoring unit 10 determines whether A > N for the count value A and the threshold value N in step S304.

When it is determined that the condition of A > N is not satisfied in the above-described step S304, the network monitoring unit 10 returns to step S302. Also, the count value A is reset according to an instruction in step S306, S312, or S405 as will be described later in the course of iterating the process of steps S302 to S304. The process like steps S302 to S304 is iterated, so that it is possible to determine the traffic volume by smoothing without reacting to an instantaneous change in the data volume Vd.

On the other hand, when it is determined that A > N in step S304, the current traffic volume is estimated to be within a "small" range." Accordingly, the network monitoring unit 10 outputs the determination result of the "small" DL traffic volume in

### step S305.

Next, the network monitoring unit 10 issues an instruction to reset the count value A in step S306. Accordingly, a counter (not illustrated) of the count value A resets the count value A. In addition, the network monitoring unit 10 is set to assign the "small" traffic volume determination threshold value Xd to the DL traffic determination threshold value Zd in step S307, and return to the step of step S302.

In addition, the network monitoring unit 10 determines whether Yd > Vd by comparing the "medium" DL traffic determination threshold value Yd to the data volume Vd in step S308. The "medium" DL traffic determination threshold value Yd is preset based on a medium data volume between "small" and "large" DL traffic volumes.

When it is determined that the condition of Yd > Vd is not satisfied in the above-described step S308, the network monitoring unit 10 directly iterates the determination process of step S308. On the other hand, when it is determined that Yd > Vd in step S308, the network monitoring unit 10 increments a count value B in step S309. Next, the network monitoring unit 10 determines whether B > M for the count value B and the threshold value M in step S310.

When it is determined that B > M in the above-described step S310, the network monitoring unit 10 returns to step S308. In addition, the count value B is reset when step S312 or S405 as will be described later is executed in the course of iterating the process of steps S308 to S310.

On the other hand, when it is determined that the condition of B > M is not satisfied in step S310, the current traffic volume is estimated to be within in a "medium" range. Accordingly, the network monitoring unit 10 outputs a determination result indicating that the DL traffic volume is "medium" in step S311. According to the output of the determination result, the network monitoring unit 10 issues an instruction to reset the count values A and B in step S312. Accordingly, counters (not illustrated) of the count values A and B in the network monitoring unit 10 reset the count values A and B. In addition, the network monitoring unit 10 assigns the "medium" traffic determination threshold value Yd to the DL traffic determination threshold value Zd in step S313, and returns to the step of step S308.

In addition, the transmission path monitoring unit 22 determines whether Zd < Vd by comparing the DL traffic determination threshold value Zd to the data volume Vd in step S401. As understood from the above description, the side of the network monitoring unit 10 assigns an appropriately different value to the DL traffic determination threshold value Zd according to the determination result of the traffic volume. The transmission path monitoring unit 22 executes the process of step S401 by receiving the DL traffic determination threshold value Zd from the network monitoring unit 10.

When it is determined that the condition of Zd < Vd is not satisfied in the above-described step S401, the transmission path monitoring unit 22 directly iterates the determination process of step S401. On the other hand, when it is determined that Zd < Vd in step S401, the transmission path monitoring unit 22 increments a count value C in step S402. Next, the transmission path monitoring unit 22 determines whether C > L for the count value C and the threshold value L in step S403.

When it is determined that C > L in the above-described step S403, the transmission path monitoring unit 22 returns to step S401. On the other hand, when it is determined that the condition of C > L is not satisfied in step S403, the current traffic volume is estimated to be increased above the "small" or "medium" range. In this case, the transmission path monitoring unit 22 outputs the determination result of the "large" DL traffic volume in step S404. According to the output of the determination result, the transmission path monitoring unit 22 issues an instruction to reset the count values A, B, and C in step S404. Accordingly, the counters of the count values A and B in the network monitoring unit 10 and the counter of the count value C in the transmission path monitoring unit 22 reset the count values held by themselves. Thereafter, the transmission path monitoring unit 22 returns to step S401 in which the "large" DL traffic determination threshold value Wd is assigned to the DL traffic determination threshold value Zd in step S301 in the network monitoring unit 10.

Also, in order to determine the UL traffic volume, it is only necessary to use the following parameters instead of the data volume Vd of the DL data Dd, the DL traffic determination threshold value Zd, the "large" DL traffic determination threshold value Wd, the "medium" DL traffic determination threshold value Yd, and the "small" DL traffic determination threshold value Xd under the above-described process based on FIG. 4. That is, it is only necessary to use a data volume Vu of UL data Du, a UL traffic determination threshold value Zu, a "large" UL traffic determination threshold value Wu, a "medium" UL traffic determination threshold value Yu, and a "small" UL traffic determination threshold value Xu. In addition, it is only necessary to use values set in correspondence with the UL traffic volume even for threshold values N, M, and L corresponding to the count values A, B, and C. Also, it is preferred that the threshold values N, M, and L be set to have a magnitude relationship of N > M > L so that discarding or delay of a packet of data to be transmitted/received is as small as possible.

A band or a data transmission rate may be different between UL and DL of data. In the first embodiment, as described above, it is possible to independently determine the traffic volume for each of the UL and DL using different threshold values in the UL and DL. Thereby, the traffic volume can be accurately determined in correspondence with each direction of the UL and DL.

In addition, although the traffic volumes are determined in three steps of "large," "medium," and "small" traffic volumes for convenience to simplify the description in the above-described example, for example, it is possible to make a configuration so that a determination is made in four or more steps by subdividing the traffic volumes. If QPSK, 16 QAM, 64 QAM, 128 QAM, 256 QAM, and 512 QAM are adopted as the multi-level modulation scheme as a specific example, it is possible to perform power control based on determination results in six steps.

### [Second embodiment]

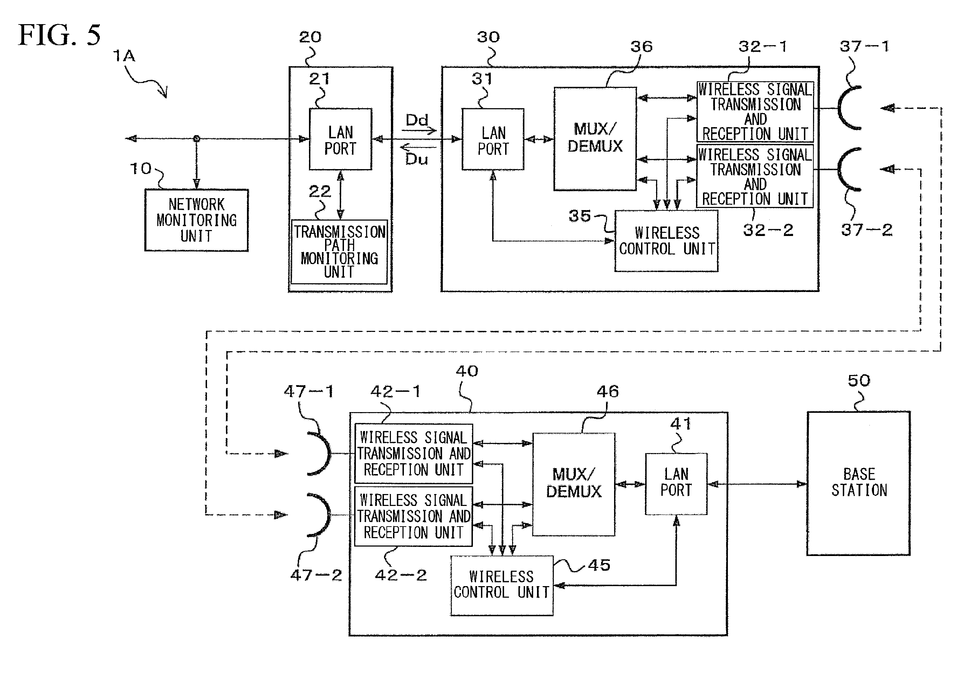

FIG. 5 illustrates a configuration example of a communication system 1A serving as the second embodiment. Also, the same parts as in FIG. 1 are assigned the same reference signs in this drawing, and description thereof is omitted. In the communication system 1A illustrated in this drawing, wireless communication devices 30 and 40 are configured to transmit and receive data according to a multiple input multiple output (MIMO) scheme. Thus, the wireless communication device 30 includes a multiplexer/demultiplexer 36 and two wireless signal transmission and reception units 32-1 and 32-2. In addition, two antennas 37-1 and 37-2 are provided in correspondence therewith. Also, in this case, the transmission amplifier 33 and the reception amplifier 34 illustrated in FIG. 1 are assumed to be included in each of the wireless signal transmission and reception units 32-1 and 32-2.

Likewise, the wireless communication device 40 also includes a multiplexer/demultiplexer 46 and two wireless signal transmission and reception units 42-1 and 42-2 in correspondence with the MIMO scheme. In addition, two antennas 47-1 and 47-2 are provided in correspondence with each of the wireless signal transmission and reception units 42-1 and 42-2.

A communication operation between the wireless communication device 30 and the wireless communication device 40 corresponding to the MIMO scheme is as follows. Here, an example in which DL data is transmitted will be described. In the wireless communication device 30, the multiplexer/demultiplexer 36 distributes and forwards DL data forwarded from the LAN port 31 to each of the wireless signal transmission and reception units 32-1 and 32-2.

The wireless signal transmission and reception unit 32-1 executes a predetermined modulation process on the forwarded DL data, and causes the processed DL data to be transmitted from the antenna 37-1. Simultaneously, the wireless signal transmission and reception unit 32-2 also executes a predetermined modulation process corresponding to the MIMO scheme on the forwarded DL data, and causes the processed DL data to be transmitted from the antenna 37-2.

Radio waves transmitted from the antenna 37-1 are selectively received by the antenna 47-1 in the wireless communication device 40 and input to the wireless signal transmission and reception unit 42-1. Simultaneously, radio waves transmitted from the antenna 37-2 are selectively received by the antenna 47-2 in the wireless communication device 40 and input to the wireless signal transmission and reception unit 42-2.

The wireless signal transmission and reception units 42-1 and 42-2 demodulate DL data from input reception signals, and output the demodulated DL data to the multiplexer/demultiplexer 46. The multiplexer/demultiplexer 46 combines the DL data input from each of the wireless signal transmission and reception units 42-1 and 42-2 and delivers the combined DL data to the LAN port 41.

The above-described data transmission and reception are performed so that a band is widened in a pseudo manner and a communication rate is increased. For example, in the case of two antennas as in the example of FIG. 5, the band is theoretically widened by a factor of 2. Also, in the case of UL data, as opposed to the above description, the wireless communication device 40 divides, modulates, and transmits data and the wireless communication device 30 receives, demodulates, and combines data.

Under the above-described configuration, the wireless communication devices 30 and 40 operate as follows. That is, in the case of the determination result of a "large" traffic volume, data transmission using two antennas according to the MIMO scheme is executed. On the other hand, in the case of the determination result of a "small" traffic volume, data transmission using only one antenna is executed without going through the MIMO scheme. That is, an operation is performed so that the number of used antennas corresponding to the MIMO scheme is switched according to the determination result of the traffic volume.

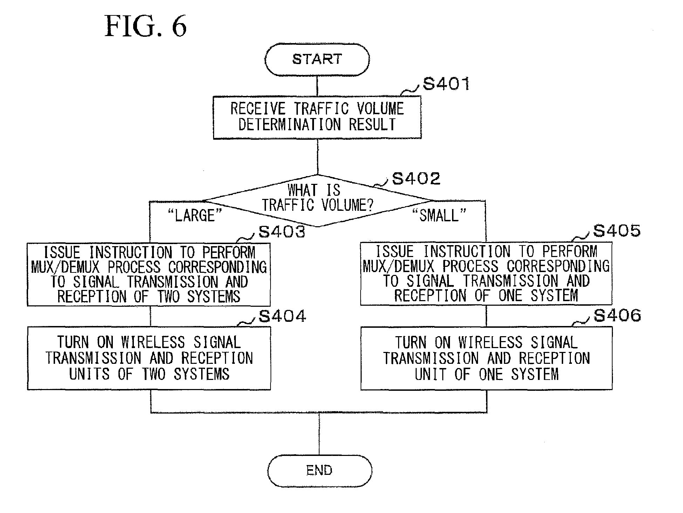

The flowchart of FIG. 6 illustrates an example of a processing step to be executed by the wireless communication devices 30 and 40 according to traffic volume determination results of the network monitoring unit 10 and the transmission path monitoring unit 22. Also, the process illustrated in this drawing can be regarded as being executed by the wireless control unit 35 in the wireless communication device 30 and the wireless control unit 45 in the wireless communication device 40. In addition, here, when the number of used antennas (the number of signal transmission and reception systems) is switched in two steps of one antenna and two antennas, the traffic volume is assumed to be determined using the two steps of "large" and "small" traffic volumes.

In relation to switching of the number of used antennas (the number of signal transmission and reception systems), it is necessary to transmit and receive data in a state in which the number of used antennas is consistent between both the transmission and reception sides of data. Thus, notification of the determination result of the traffic volume by the network monitoring unit 10 or the transmission path monitoring unit 22 in the configuration illustrated in FIG. 5 is provided to both of the wireless communication devices 30 and 40 regardless of UL and DL of data.

According to the above-described notification, the wireless control units 35 and 45 receive information on a traffic volume determination result in step S401, and determine whether the traffic volume determination result received in the next step S402 indicates a "large" or "small" traffic volume. When the traffic volume is determined to be "large" in step S402, the process of steps S403 and S404 is executed as follows.

In step S403, the wireless control units 35 and 45 instruct the multiplexers/demultiplexers 36 and 46 to execute a process corresponding to the use of two antennas, respectively. In addition, the wireless control unit 35 executes control so that each of the systems of the wireless signal transmission and reception units 32-1 and 32-2 is turned on to execute its operation in step S404. In step S404, the wireless control unit 45 also turns on both of the wireless signal transmission and reception units 32-1 and 32-2.

According to the instruction and control of the above-described steps S403 and S404, the multiplexers/demultiplexers 36 and 46 and the wireless signal transmission and reception units 32 and 42 operate as follows. Also, an example in which DL data is transmitted from the wireless control unit 35 to the wireless control unit 45 will be described here. In this case, the multiplexer/demultiplexer 36 of the wireless control unit 35 divides DL data input from the LAN port 31 into two systems and forwards the divided DL data to the wireless signal transmission and reception units 32-1 and 32-2. At this time, because both the wireless signal transmission and reception units 32-1 and 32-2 are turned on, the forwarded DL data is modulated and transmitted from the antennas 37-1 and 37-2.

In addition, both of the wireless signal transmission and reception units 42-1 and 42-2 of the wireless communication device 40 are turned on and operated to demodulate signals received by the antennas 47-1 and 47-2. In addition, as a process corresponding to signal transmission and reception of two systems, the multiplexer/demultiplexer 46 operates to receive data demodulated by the wireless signal transmission and reception units 42-1 and 42-2, combine the received data into one, and forward the combined data to the LAN port 41. According to this operation, in correspondence with a state of the "large" traffic volume, wireless communication according to the MIMO scheme is performed using two antennas between the wireless communication device 30 and the wireless communication device 40.

In addition, when the traffic volume is determined to be "small" in step S402, the wireless control units 35 and 45 cause the multiplexers/demultiplexers 36 and 46 to execute a process corresponding to a transmission/reception signal of one system in step S405.

Along with this, the wireless control unit 35 controls an operation to be executed by turning on only one (one system) of the wireless signal transmission and reception units 32-1 and 32-2 in step S406. Here, the wireless signal transmission and reception unit 32-2 is set to be turned off by turning on the wireless signal transmission and reception unit 32-1. Likewise, the wireless control unit 45 is set to control only one system to be effectively operated by turning on the wireless signal transmission and reception unit 42-1 and turning off the wireless signal transmission and reception unit 42-2 in step S406.

According to the instruction and control of the above-described steps S405 and S406, the multiplexer/demultiplexer 36 in the wireless communication device 30 forwards DL data input from the LAN port 31 to the wireless signal transmission and reception unit 32-1 without dividing the DL data. Thereby, a signal is transmitted only by the antenna 37-1 from the wireless communication device 30.

Next, in the wireless communication device 30, the signal transmitted from the antenna 37-1 is received only by the antenna 47-1 and input to the wireless signal transmission and reception unit 42-1. The wireless signal transmission and reception unit 42-1 forwards data obtained by demodulating the input signal to the multiplexer/demultiplexer 46. The multiplexer/demultiplexer 46 directly outputs the forwarded data to the LAN port 41.

In the second embodiment as described above, the number of antennas to be used under the MIMO scheme according to the traffic volume, that is, the number of systems of the wireless signal transmission and reception units 32 and 42, is set to be changed. Although a transmission rate is increased when the number of used antennas is increased, a power consumption amount is also increased because the number of wireless signal transmission and reception units 32 and 42 to be turned on is increased. Accordingly, the number of used antennas is switched to be decreased when the traffic volume is small. The systems of the wireless signal transmission and reception units 32 and 42 corresponding to an unused antenna are turned off. Thereby, it is possible to reduce power consumption.

Also, in the above-described second embodiment, the multiplexers/demultiplexers 36 and 46, for example, correspond to a dividing/combining unit disclosed in the claims. In addition, the wireless control units 35 and 45 which execute the process of steps S404 and S406 of FIG. 6, for example, correspond to a wireless signal transmission and reception operation control unit disclosed in the claims. In addition, the wireless control units 35 and 45 which execute the process of steps S403 and S405 of FIG. 6, for example, correspond to a dividing/combining control unit disclosed in the claims.

In addition, although the number of systems of signal transmission and reception (the number of used antennas) corresponding to the MIMO scheme is two at maximum in the above-described configuration of FIG. 5, the number of transmission and reception systems in the MIMO scheme can also be configured to be changed according to the determination result of a traffic volume in a configuration including three or more systems.

In addition, a combination of the configuration of the first embodiment described above with reference to FIGs. 1 to 4 and the configuration of the second embodiment described above with reference to FIGs. 5 and 6 is also considered. That is, according to the traffic volume, the number of transmission and reception systems to be operated in correspondence with the MIMO scheme is set to be changed and a modulation level and transmission power in the wireless signal transmission and reception units 32 and 42 which are executing an operation are also set to be changed. As one example, if each of the number of transmission and reception systems and a switchable modulation level is 2, transmission power control is performed in correspondence with traffic-volume determination results of 4 (= 2 × 2) steps.

In addition, as a modified example of the second embodiment, a functional part of the network monitoring unit 10 can be included in the transmission path monitoring unit 22 and the network monitoring unit 10 can be omitted. In addition, functional parts of the network monitoring unit 10 and the transmission path monitoring unit 22, for example, may be provided within the wireless communication device 30. In this case, the functional parts of the network monitoring unit 10 and the transmission path monitoring unit 22 are provided to be interposed between the LAN port 31 and the router 20, so that it is possible to accurately detect and determine the data volume and the traffic volume in the wired transmission path.

Priority is claimed on Japanese Patent Application No. 2011-065601, filed March 24, 2011, the content of which is incorporated herein by reference.

### INDUSTRIAL APPLICABILITY

Transmission power control of a wireless communication device is more accurately performed so that a data volume can be more stably detected in a transmission path.

### [Description of Reference Symbols]

- 1: Communication system
- 1A: Communication system
- 2: Antenna
- 10: Network monitoring unit
- 20: Router
- 21: LAN port
- 22: Transmission path monitoring unit
- 30: Wireless communication device
- 31: LAN port
- 32: Wireless signal transmission and reception unit
- 33: Transmission amplifier
- 34: Reception amplifier
- 35: Wireless control unit
- 36: Multiplexer/demultiplexer
- 37: Antenna
- 40: Wireless communication device
- 41: LAN port
- 42: Wireless signal transmission and reception unit
- 43: Transmission amplifier
- 44: Reception amplifier
- 45: Wireless control unit
- 46: Multiplexer/demultiplexer
- 47: Antenna
- 50: Base station

## Claims

1. A communication system comprising:
a plurality of wireless communication devices which communicate with other wireless communication devices via a wireless transmission path;
a traffic volume determination unit which determines a traffic volume based on a data volume of a wired transmission path connected to a specific wireless communication device and notifies a predetermined wireless communication device among the plurality of wireless communication devices of the determined traffic volume;
a modulation level control unit which is included in each of the wireless communication devices and changes a modulation level to be used in a modulation process on data to be transmitted to the wireless transmission path based on the traffic volume of the notification; and
a transmission power control unit which is included in each of the wireless communication devices and changes transmission power for transmitting a transmission signal obtained by the modulation process using the changed modulation level to the wireless transmission path.

2. The communication system according to Claim 1, wherein, when the specific wireless communication device has determined a traffic volume of downlink (DL) data to be transmitted to the wireless transmission path, the traffic volume determination unit notifies the specific wireless communication device of the determined traffic volume of the DL data.

3. The communication system according to Claim 1, wherein, when the specific wireless communication device has determined a traffic volume of uplink (UL) data to be received from the wireless transmission path, the traffic volume determination unit notifies the specific wireless communication device of the determined traffic volume of the UL data.

4. The communication system according to claim 1, wherein each of the wireless communication devices further includes:
a plurality of wireless signal transmission and reception units which operate to execute at least the modulation process and a demodulation process corresponding to the modulation level used in the modulation process;
a plurality of antennas corresponding to the plurality of wireless signal transmission and reception units;
a dividing/combining unit which divides transmission data to be transmitted to the wireless transmission path to output the divided transmission data to the plurality of wireless signal transmission and reception units and combines reception data from the wireless transmission path input from the plurality of wireless signal transmission and reception units;
a wireless signal transmission and reception operation control unit which causes a predetermined wireless signal transmission and reception unit among the plurality of wireless signal transmission and reception units to execute an operation based on the traffic volume of the notification; and
a dividing/combining control unit which controls the dividing/combining unit to output the divided transmission data only to a wireless signal transmission and reception unit that executes the operation or combine only reception data output from the wireless signal transmission and reception unit that executes the operation.

5. A communication system comprising:
a plurality of wireless communication devices which communicate with other wireless communication devices via a wireless transmission path;
a traffic volume determination unit which determines a traffic volume based on a data volume of a wired transmission path connected to a specific wireless communication device and notifies a predetermined wireless communication device among the plurality of wireless communication devices of the determined traffic volume;
a plurality of wireless signal transmission and reception units which are included in each of the wireless communication devices and operate to execute at least a modulation process and a demodulation process corresponding to the modulation process;
a plurality of antennas which are included in each of the wireless communication devices and correspond to the plurality of wireless signal transmission and reception units;
a dividing/combining unit which is included in each of the wireless communication devices, divides transmission data to be transmitted to the wireless transmission path to output the divided transmission data to the plurality of wireless signal transmission and reception units, and combines reception data from the wireless transmission path input from the plurality of wireless signal transmission and reception units;
a wireless signal transmission and reception operation control unit which is included in each of the wireless communication devices, and causes a predetermined wireless signal transmission and reception unit among the plurality of wireless signal transmission and reception units to execute an operation based on the traffic volume of notification; and
a dividing/combining control unit which is included in each of the wireless communication devices, and controls the dividing/combining unit to output the divided transmission data only to a wireless signal transmission and reception unit that executes the operation or combine only reception data output from the wireless signal transmission and reception unit that executes the operation.

6. A communication control method of a communication system including a plurality of wireless communication devices that communicate with other wireless communication devices via a wireless transmission path, comprising:
a traffic volume determination step of determining a traffic volume based on a data volume of a wired transmission path connected to a specific wireless communication device and notifying a predetermined wireless communication device among the plurality of wireless communication devices of the determined traffic volume;
a modulation level control step which is used in each of the wireless communication devices and in which a modulation level to be used in a modulation process on data to be transmitted to the wireless transmission path is changed based on the traffic volume of the notification; and
a transmission power control step which is used in each of the wireless communication devices and in which transmission power for transmitting a transmission signal obtained by the modulation process using the changed modulation level to the wireless transmission path is changed.

7. A communication control method in a communication system including a plurality of wireless communication devices which communicate with other wireless communication devices via a wireless transmission path, wherein each of the plurality of wireless communication devices includes a plurality of wireless signal transmission and reception units which operate to execute at least a modulation process and a demodulation process corresponding to the modulation process, a plurality of antennas corresponding to the plurality of wireless signal transmission and reception units, and a dividing/combining unit which divides transmission data to be transmitted to the wireless transmission path to output the divided transmission data to the plurality of wireless signal transmission and reception units and combines reception data from the wireless transmission path input from the plurality of wireless signal transmission and reception units, the communication control method comprising:
a traffic volume determination step of determining a traffic volume based on a data volume of a wired transmission path connected to a specific wireless communication device and notifying a predetermined wireless communication device among the plurality of wireless communication devices of the determined traffic volume;
a wireless signal transmission and reception operation control step which is used in each of the wireless communication devices and which causes the predetermined wireless signal transmission and reception unit among the plurality of wireless signal transmission and reception units to execute an operation based on the traffic volume of the notification; and
a dividing/combining control step which is used in each of the wireless communication devices and controls the dividing/combining unit to output the divided transmission data only to a wireless signal transmission and reception unit that executes the operation or combine only reception data output from a wireless signal transmission and reception unit that executes the operation.
